# FASCICULE DE BREVET EUROPEEN

(11) **EP 0 724 124 B1**
(45) Date de publication et mention de la délivrance du brevet: **22.11.2000**
(21) Numéro de dépôt: 96101110.3
(22) Date de dépôt: 26.01.1996
(51) Int. Cl.: F28D 1/02

(54) **Raccordement électrique d'un motoventilateur monté sur un corps à ailettes d'un échanger de chaleur**
Elektrischer Anschluss eines auf einem Rippenkörper eines Wärmetauschers montierten Ventilators
Electric connection of an engine fan mounted on the finned body of a heat exchanger

(30) Priorité: 30.01.1995 FR 9501044
(43) Date de publication de la demande: 31.07.1996
(73) Titulaire: VALEO THERMIQUE MOTEUR, 78320 Le Mesnil Saint-Denis (FR)
(72) Inventeur: Potier, Michel, F-78120 Rambouillet (FR); Santander, Eduardo, F-94400 Vitry-sur-Seine (FR)

(56) Documents cités:
- EP-A- 0 183 596
- EP-A- 0 186 581
- EP-A- 0 316 137
- EP-A- 0 380 917
- US-A- 3 324 938

## Description

L'invention concerne un ensemble comprenant un moto-ventilateur monté sur un corps à ailettes d'un échangeur de chaleur, en particulier d'un radiateur servant au refroidissement d'un moteur thermique de véhicule automobile, tel que défini dans le préambule de la revendication 1.

On connaît déjà, d'après la publication de Brevet français No 2 573 128, un ensemble de ce type dans lequel le moteur électrique du moto-ventilateur est fixé directement sur le corps de l'échangeur de chaleur, au lieu d'être fixé, soit à des traverses, soit à des éléments du châssis ou de la carrosserie du véhicule, comme dans les solutions traditionnelles.

La solution préconisée par la publication précitée permet notamment de diminuer l'encombrement de l'ensemble échangeur de chaleur-moto-ventilateur, de diminuer les bruits engendrés par l'hélice et d'améliorer l'écoulement d'air balayant le corps de l'échangeur de chaleur sous l'action de l'hélice.

Toutefois, cette solution connue pose un problème pour le raccordement électrique du moto-ventilateur du fait que le moteur électrique se trouve placé entre le corps à ailettes et l'hélice, contrairement aux solutions traditionnelles où l'hélice est située entre le corps à ailettes et le moteur électrique.

L'invention vient apporter une autre solution à ce problème en procurant un dispositif de raccordement électrique du type précité qui permet de raccorder le moteur électrique d'une manière particulièrement simple et efficace.

Elle propose à cet effet un ensemble du type précité qui comprend les caractéristiques définies dans la partie caractérisante de la revendication 1.

Il en résulte que le faisceau de câbles ne risque pas d'être endommagé ni par l'hélice ni par les ailettes de l'échangeur du fait des vibrations.

Dans l'invention, les moyens de fixation comprennent une goulotte à profil en U propre à recevoir le faisceau de câbles et possédant une extrémité intérieure reliée au moteur électrique et une extrémité extérieure dépassant le pourtour de l'hélice, de manière à s'étendre au-delà de la zone d'action de l'hélice.

Avantageusement, l'extrémité intérieure de la goulotte est rattachée par des ponts de matière à un boîtier entourant le moteur du moto-ventilateur.

Selon une autre caractéristique, l'extrémité extérieure de la goulotte comprend un capot transversal situé entre le faisceau de câbles électriques et le pourtour de l'hélice.

Avantageusement, les ailettes du corps sont déformées localement au moins dans une région voisine du pourtour de l'hélice pour fournir une empreinte en creux formant canal pour recevoir la goulotte et le faisceau de câbles électriques.

Dans une forme de réalisation pas conforme à l'invention, les moyens de fixation comprennent au moins une barrette recouvrant transversalement le faisceau de câbles et munies de pattes de fixation s'engageant entre les ailettes.

Cette barrette est de préférence située proche du pourtour de l'hélice et les ailettes du corps sont déformées localement au moins dans la région où se trouve la barrette pour fournir une empreinte en creux formant canal de réception du faisceau de câbles.

L'invention s'applique tout particulièrement à un échangeur de chaleur comprenant au moins une boîte à eau reliée au corps à ailettes par l'intermédiaire d'un collecteur.

En complément, les moyens de fixation comprennent une bride repliée fixée à la boîte à eau et propre à appliquer le faisceau de câbles contre le corps à ailettes au niveau de sa jonction au collecteur.

Cette bride repliée permet de tendre le faisceau de câbles dans sa partie qui s'étend entre le moteur électrique et la boîte à eau.

Les ailettes du corps sont avantageusement déformées localement sur une partie au moins de la longueur du corps à ailettes pour fournir une empreinte en creux formant canal de réception du faisceau de câbles.

Cette empreinte peut être formée par déformation localisée des ailettes après assemblage du corps à ailettes ou encore par découpe préalable de chaque ailette. En ce cas, on utilise avantageusement des ailettes identiques, si bien que le canal s'étend sur toute la longueur du corps à ailettes.

Lorsque le corps de l'échangeur comprend une multiplicité d'ailettes formées par de fines plaques métalliques parallèles entre elles, l'empreinte en creux formant canal de réception du faisceau de câbles s'étend avantageusement dans une direction transversale aux ailettes.

Dans la description qui suit, faite seulement à titre d'exemple, on se réfère aux dessins annexés, sur lesquels :
- la figure 1 est une vue en plan d'un échangeur de chaleur équipé d'un moto-ventilateur et d'un dispositif de raccordement électrique selon l'invention;
- la figure 2 est un détail à échelle agrandie de la figure 1 dans une première forme de réalisation;
- la figure 3 est une vue en coupe selon la ligne III-III de la figure 2;
- la figure 4 est une vue en coupe selon la ligne IV-IV de la figure 2;
- la figure 5 est une vue en coupe selon la ligne V-V de la figure 4;
- la figure 6 est une vue partielle analogue à celle de la figure 2 dans une forme de réalisation pas conforme à l'invention;
- la figure 7 est une vue en coupe selon la ligne VII-VII de la figure 6;
- la figure 8 est une vue en coupe selon la ligne VIII-VIII de la figure 6;
- la figure 9 est une vue analogue à celle de la figure 2 dans une forme modifiée;
- la figure 10 est une vue en coupe selon la ligne X-X de la figure 9; et
- la figure 11 est une vue en coupe selon la ligne XI-XI de la figure 9.

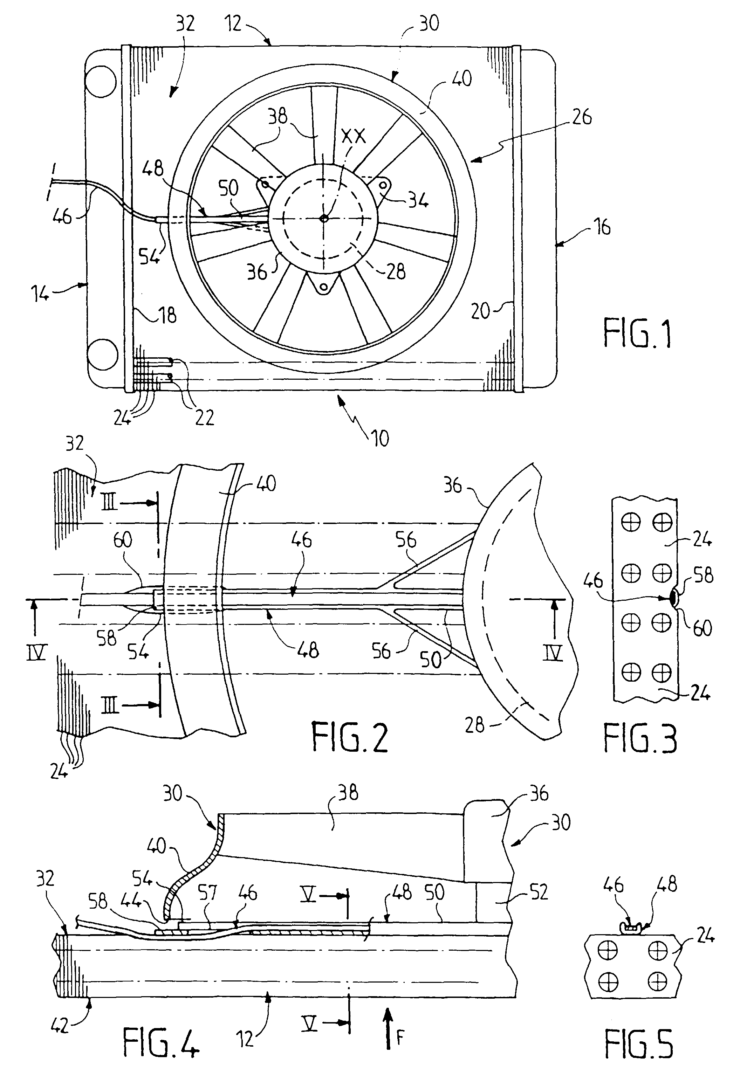

On se réfère tout d'abord à la figure 1 qui représente un échangeur de chaleur 10 tel qu'un radiateur servant au refroidissement d'un moteur thermique de véhicule automobile. L'échangeur 10 comprend un corps 12 du type à ailettes monté entre deux boîtes à eau 14 et 16 par l'intermédiaire de deux plaques collectrices 18 et 20. Le corps 12 est constitué d'un faisceau de tubes 22 traversant une multiplicité d'ailettes 24 et dont les extrémités sont reçues à étanchéité dans les plaques collectrices 18 et 20.

Les ailettes 24 sont de fines plaques métalliques de forme générale rectangulaire qui sont disposées parallèles entre elles et perpendiculairement aux axes des tubes 22.

Sur le corps 12 est monté directement un moto-ventilateur 26 comprenant un moteur 28 entraînant en rotation une hélice 30 autour d'un axe XX. L'hélice 30 est disposée en regard d'une grande face 32, de forme générale rectangulaire, du corps 12, qui s'étend entre les plaques collectrices 18 et 20.

Le moteur 28 est solidaire d'un support triangulaire 34, lequel est fixé sur le corps 12 par des moyens appropriés qui peuvent être par exemple ceux décrits dans la publication de Brevet français No 2 573 128 déjà citée.

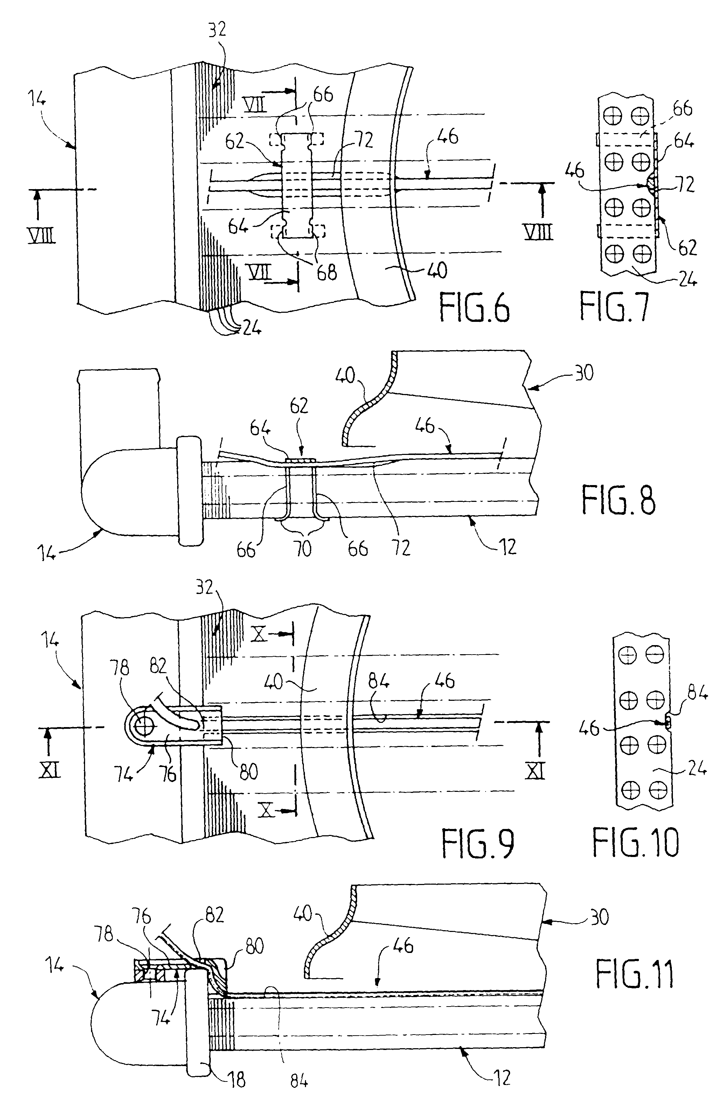

L'hélice 30 comprend un moyeu 36 calé sur l'arbre du moteur 28 et relié par des pales radiales 38 à une jupe 40 de forme générale circulaire. La jupe 40, qui constitue le pourtour de l'hélice, présente un profil de forme choisie (figure 4) pour canaliser un flux d'air F qui traverse l'échangeur de chaleur à partir d'une grande face 42 du corps 12 pour sortir par l'autre face 32.

Comme on peut le voir sur la figure 4, la jupe 40 comporte un rebord annulaire 44 qui est situé en vis-à-vis de la face 32 et à faible distance de cette dernière.

Le moteur électrique 28 est alimenté par un dispositif de raccordement électrique comprenant un faisceau 46 de câbles électriques qui part du moteur 28 et s'étend le long d'une partie au moins de la grande face 32 du corps 12 pour aller au-delà de la boîte à eau 14 (figure 1).

Dans la forme de réalisation des figures 1 à 5, le dispositif de l'invention comprend une goulotte 48 à section générale en U (figure 5), laquelle comprend une extrémité intérieure 50 rattachée à un carter 52 entourant le moteur 28 et une extrémité extérieure 54 qui dépasse le pourtour de l'hélice formé par la jupe 40.

La goulotte 48 est généralement rectiligne et s'étend dans une direction radiale par rapport à l'axe X-X de rotation du moteur, tout en étant généralement transversale à la direction des ailettes 24.

L'extrémité 50 de la goulotte 48 est rattachée au carter 52 par deux ponts de matière 56. La goulotte 48 peut ainsi être formée d'une seule pièce avec le carter 52, par exemple par moulage de matière plastique.

Dans la région de son extrémité 54, la goulotte 48 comporte une fente axiale 57, ce qui permet au faisceau de câbles 46 reçu dans la goulotte de traverser le fond de la goulotte pour s'éloigner du bord 44 de la jupe de l'hélice (figure 4).

Comme on le voit mieux sur les figures 2, 3 et 4, l'extrémité 54 de la goulotte comporte un capot transversal 58 venant recouvrir le faisceau 46 et venant ainsi s'interposer entre ce faisceau et le bord 44 de la jupe de l'hélice. Le capot 58 est situé au droit du bord 44 et protège ainsi le faisceau 46 à l'égard de tout contact accidentel avec le bord 44 de la jupe.

Comme montré aux figures 2 et 3, les ailettes 24 sont déformées localement dans la région voisine de la jupe 40 de l'hélice pour fournir une empreinte en creux 60 formant canal pour recevoir l'extrémité extérieure de la goulotte et le faisceau 46. Cette empreinte en creux permet d'éloigner encore plus le faisceau 46 du bord 44 de la jupe de l'hélice.

Il en résulte que le faisceau de câbles 46 est plaqué contre la grande face 32 du corps 12 par l'intermédiaire de la goulotte, si bien qu'il se trouve hors du contact de l'hélice et à l'abri des vibrations qui pourraient l'endommager par contact avec les ailettes.

Dans la forme de réalisation des figures 6 à 8 qui n'est pas conforme à l'invention, le faisceau de câbles 46 est appliqué directement contre les tranches des ailettes 24. Dans cette forme de réalisation, les moyens de fixation comprennent une barrette 62 présentant un corps oblong 64 et propre à recouvrir transversalement le faisceau 46 . Dans l'exemple, la barrette 62 recouvre transversalement le faisceau 46 dans une région proche de la jupe 40 de l'hélice, et à l'extérieur de cette dernière.

Le corps 64 comporte, à une extrémité, une paire de pattes repliées 66 et, à une autre extrémité, une paire de pattes repliées 68. Ces pattes sont propres à s'engager entre les ailettes et à être ensuite rabattues pour former des extrémités repliées 70 (figure 8). Le faisceau 46 se trouve ainsi parfaitement plaqué contre le corps 12 de l'échangeur.

Pour écarter davantage le faisceau 46 de tout contact avec la jupe 40 de l'hélice, les ailettes 24 sont déformées localement dans la région de la barrette pour fournir une i empreinte en creux 72 analogue à l'empreinte 60 de la forme de réalisation précédente.

Dans la forme de réalisation des figures 9 à 11, les moyens de fixation comprennent, en complément de la goulotte 48, une bride repliée 74 fixée sur une paroi latérale de la boîte à eau 14 du même côté que la grande face 32. La bride 74 comprend un corps allongé 76 dont une extrémité est munie d'un trou 78 servant à la fixation de la bride sur la boîte à eau et dont l'autre extrémité comporte une patte 80 repliée à angle droit. Le corps 76 comporte un trou 82 situé proche de la zone de raccordement à la patte repliée 80.

La patte 74 s'étend dans une direction transversale à celle des ailettes en étant dans le prolongement du faisceau 46. Le corps 76 et l'extrémité repliée 80 viennent s'appliquer contre la plaque collectrice 18 au niveau du raccordement avec le corps 12. Le faisceau de câbles 46 est plaqué contre la grande face 32, se trouve ensuite coincé par la bride 74 entre le bord de la plaque collectrice 18 puis traverse la bride au niveau du trou 82. Il en résulte que le faisceau de câbles 46 peut être parfaitement tendu et appliqué fermement contre la grande face 32 du corps 12 sans risque d'être endommagé par l'hélice ou par les ailettes.

Là encore, on peut prévoir avantageusement une déformation locale des ailettes pour fournir une empreinte en creux formant canal pour recevoir le faisceau 46 ou comme mieux visible sur les figures, de prévoir une encoche 84 s'étendant sur toute la longueur du faisceau.

Quelle que soit la forme de réalisation choisie, le faisceau 46 est plaqué contre la grande face 32 du corps 12 et maintenu hors de contact de l'hélice, tout en étant à l'abri de vibrations qui pourraient occasionner un endommagement du faisceau par frottement contre les ailettes.

L'invention n'est pas limitée aux formes de réalisation décrites précédemment à titre d'exemple et s'étend à d'autres variantes.

Ainsi, l'invention peut s'appliquer aussi à d'autres types d'échangeurs de chaleur dans lesquels les ailettes sont constituées par des plaques ondulées au lieu de plaques planes parallèles.

## Revendications

1. Ensemble comprenant un motoventilateur monté sur un corps à ailettes d'un échangeur de chaleur, le motoventilateur (26) comprenant un moteur électrique (28) fixé sur le corps à ailettes (12) et entraînant une hélice (30) disposée en regard d'une grande face (32) du corps à ailettes, ledit moteur électrique étant raccordé électriquement par un faisceau (46) de câbles électriques qui part du moteur (28) du motoventilateur et s'étend le long d'une partie au moins de la grande face (32) du corps (12), caractérisé en ce qu'il comporte des moyens de fixation (48; 62; 74) qui comprennent une goulotte (48) à profil en U propre à recevoir le faisceau de câbles et possédant une extrémité intérieure (50) reliée au moteur électrique (28) et une extrémité extérieure (54) dépassant le pourtour (40) de l'hélice (30) de manière à s'étendre au-delà de la zone d'action de l'hélice, ladite goulotte permettant de maintenir le faisceau de câbles plaqué contre le corps à ailettes de manière à ce que ledit faisceau de câbles soit hors de tout contact avec l'hélice (30).

2. Ensemble selon la revendication 1, caractérisé en ce que l'extrémité intérieure (50) de la goulotte est rattachée par des ponts de matière (56) à un boîtier (52) entourant le moteur (28) du motoventilateur.

3. Ensemble selon l'une des revendications 1 et 2, caractérisé en ce que l'extrémité extérieure (54) de la goulotte (48) comprend un capot transversal (58) situé entre le faisceau (46) de câbles électriques et le pourtour (40) de l'hélice (30).

4. Ensemble selon l'une des revendications 1 à 3, caractérisé en ce que les ailettes (24) du corps (12) sont déformées localement au moins dans une région voisine du pourtour (40) de l'hélice (30) pour fournir une empreinte en creux (60) formant canal pour recevoir la goulotte (48) et le faisceau de câbles électriques (46).

5. Ensemble selon l'une des revendications 1 à 4, dans lequel l'échangeur de chaleur (10) comprend au moins une boîte à eau (14) reliée au corps (12) à ailettes (24) par l'intermédiaire d'un collecteur (18), caractérisé en ce que les moyens de fixation comprennent en outre une bride repliée (74) fixée à la boîte à eau et propre à appliquer le faisceau de câbles (46) contre le corps à ailettes au niveau de sa jonction au collecteur (18).

6. Ensemble selon la revendication 5, caractérisé en ce que les ailettes (24) du corps (12) sont déformées localement sur une partie au moins de la longueur du corps à ailettes (12) pour fournir une empreinte en creux (84) formant canal de réception du faisceau de câbles (46).

7. Ensemble selon l'une des revendications 4 et 6, dans lequel les ailettes (24) sont de fines plaques métalliques parallèles entre elles, caractérisé en ce que l'empreinte en creux (60; 72; 84) formant canal s'étend dans une direction transversale aux ailettes (24).

## Patentansprüche

1. Baugruppe, die einen motorgetriebenen Ventilator (26) umfasst, der auf einen Lamellenkörper (12) eines Wärmetauschers montiert ist, wobei der Ventilator (26) einen Elektromotor (28) beinhaltet, der an dem Lamellenkörper (12) fixiert ist und einen Propeller (30) antreibt, der gegenüber einer großen Seite (32) des Lamellenkörpers (12) angeordnet ist sowie über ein Bündel (46) von Kabeln elektrisch angeschlossen ist, die vom Motor (28) des Ventilators (26) ausgehen und wenigstens entlang eines Teiles der großen Seite (32) des Lamellenkörpers (12) verlaufen, dadurch gekennzeichnet, dass sie Befestigungsmittel (48; 62; 74) aufweist, die eine Kabelrinne (48) mit U-förmigem Profil zur Aufnahme des Kabelbündels (46) umfassen, welche ein inneres Ende (50) besitzt, das mit dem Elektromotor (28) verbunden ist, sowie ein äußeres Ende (54), das über den Umfang (40) des Propellers (30) hinausragt, derart, dass es sich bis außerhalb des Wirkungsbereichs des Propellers (30) erstreckt, wobei es die genannte Kabelrinne (48) gestattet, das Kabelbündel (46) gegen den Lamellenkörper angedrückt zu halten, so dass es außerhalb jeglichen Kontaktes mit dem Propeller (30) ist.

2. Baugruppe gemäß dem Anspruch 1, dadurch gekennzeichent, dass das innere Ende (50) der Kabelrinne (48) über Stege (56) an einem Gehäuse (52) befestigt ist, das den Motor (28) des Ventilators (26) umgibt.

3. Baugruppe gemäß einem der Ansprüche 1 oder 2, dadurch gekennzeichnet, dass das äußere Ende (54) der Kabelrinne (48) eine querverlaufende Kappe (58) aufweist, die sich zwischen dem Bündel (46) der elektrischen Kabel und dem Umfang (40) des Propellers (30) befindet.

4. Baugruppe gemäß einem der Ansprüche 1 bis 3, dadurch gekennzeichnet, dass die Lamellen (24) des Lamellenkörpers (12) wenigstens in einem örtlichen Bereich in der Nähe des Umfangs (40) des Propellers (30) verformt sind, wodurch eine konkave Ausformung (60) erzeugt wird, die einen Kanal zur Aufnahme der Kabelrinne (48) und des Kabelbündels (46) bildet.

5. Baugruppe gemäß einem der Ansprüche 1 bis 4, bei der der Wärmetauscher (10) wenigstens einen Wasserkasten umfasst, der über einen Sammler (18) mit dem Körper (12) aus Lamellen (24) verbunden ist, dadurch gekennzeichnet, dass die Befestigungsmittel darüber hinaus einen geklappten Bügel (74) umfassen, der am Wasserkasten fixiert ist und dazu geeignet ist, das Kabelbündel (46) auf der Höhe seiner Verbindungsstelle mit dem Sammler (18) an den Lamellenkörper anzulegen.

6. Baugruppe gemäß dem Anspruch 5, dadurch gekennzeichnet, dass die Lamellen (24) des Lamellenkörpers (12) örtlich in einem Bereich von wenigstens der Länge des Lamellenkörpers (12) verformt sind, so dass eine konkave Ausformung (84) zur Aufnahme des Kabelbündels (46) gebildet wird.

7. Baugruppe gemäß den Ansprüchen 4 und 6, wobei die Lamellen (24) dünne, metallene Platten sind, die untereinander parallel ausgerichtet sind, dadurch gekennzeichnet, dass sich die konkave Ausformung (60; 72; 84), die einen Kanal bildet, quer zur Richtung der Lamellen (24) erstreckt.

## Claims

1. An assembly comprising a motorised fan unit mounted on a finned body of a heat exchanger, the motorised fan unit (26) comprising an electric motor (28) fixed on the finned body (12) and driving a fan (30) disposed facing a major face (32) of the finned body, the said electric motor being connected electrically through a bundle (46) of electrical cables which leave the motor (28) of the motorised fan unit and extend along at least a portion of the major face (32) of the body (12), characterised in that it includes fastening means (48; 62; 74) which include a channel member (48) with a U-shaped profile, adapted to receive the bundle of cables and having an inner end (50) which is connected to the electric motor (28) and an outer end (54) which extends beyond the shroud (40) of the fan (30) and therefore out of the zone of action of the fan, the said channel member enabling the bundle of cables to be held flat against the finned body so that the said bundle of cables is out of any contact with the fan (30).

2. An assembly according to Claim 1, characterised in that the inner end (50) of the channel member is attached by means of integral bridges (56) to a housing (52) surrounding the motor (28) of the motorised fan unit.

3. An assembly according to Claim 1 or Claim 2, characterised in that the outer end (54) of the channel member (48) includes a transverse cap element (58) situated between the bundle (46) of electrical cables and the shroud (40) of the fan (30).

4. An assembly according to one of Claims 1 to 3, characterised in that the fins (24) of the body (12) are locally deformed in at least a region close to the shroud (40) of the fan (30), so as to provide a hollow recess (60) constituting a channel for receiving the channel member (48) and the bundle of electrical cables (46).

5. An assembly according to one of Claims 1 to 4, in which the heat exchanger (10) includes at least one water header (14) joined to the body (12) having the fins (24) through a header plate (18), characterised in that the fastening means further include a bent back flange (74) fixed to the water header and adapted to apply the bundle of cables (46) against the finned body in the region of its junction with the header plate (18).

6. An assembly according to Claim 5, characterised in that the fins (24) of the body (12) are deformed locally over at least part of the length of the finned body (12), so as to define a hollow recess (84) constituting a channel for receiving the bundle of cables (46).

7. An assembly according to Claim 4 or Claim 6, in which the fins (24) are thin metal plates parallel to each other, characterised in that the hollow recess (60; 72; 84) constituting a channel extends in a direction transverse to the fins (24).
